# EUROPEAN PATENT APPLICATION

(11) **EP 4 714 270 A1**
(43) Date of publication of application: **25.03.2026**
(21) Application number: 24836068.7
(22) Date of filing: 03.07.2024
(51) Int. Cl.: A23L 11/00, A23J 3/00, A23J 3/16, A23L 5/00, A23L 27/00, A23L 27/20, A23L 27/24

(54) **FOOD COMPOSITION, METHOD FOR PRODUCING SAID FOOD COMPOSITION, AND METHOD FOR MASKING BEAN ODOR**

(30) Priority: 03.07.2023 JP 2023109596; 24.11.2023 JP 2023199329
(71) Applicant: Kikkoman Corporation, Noda-shi, Chiba 278-8601 (JP)
(72) Inventor: KAN Eiichiro, Noda-shi, Chiba 278-8601 (JP); MIYAMASU Ayuko, Noda-shi, Chiba 278-8601 (JP); YUZUKI Masanobu, Noda-shi, Chiba 278-8601 (JP)
(74) Representative: Kramer Barske Schmidtchen Patentanwälte PartG mbB
(86) International application number: PCT/JP2024/024063
(87) International publication number: WO 2025/009555

(57) **Abstract**

The present invention relates to a food composition and the like containing a fermented product of a plant raw material and a bean-derived food. The fermented product of the plant raw material contains at least one of heptanoic acid, 2,4-decadienal, and 3-octen-2-one.

## Description

### TECHNICAL FIELD

The present invention relates to a food composition, a method for producing the food composition, and a method for masking a bean odor.

### BACKGROUND ART

Meat is abundant in nutrients such as vitamins, proteins, and minerals and is a nutritionally important food material. However, excessive intake of meat can cause various chronic diseases including metabolic syndrome because meat contains a large amount of lipids, in particular saturated fatty acids, and because the energy thereof is excessive also compared with other food materials.

Therefore, in order to prevent excessive intake of meat, use of a meat-like food, which appears just like a processed meat food, has been attracting attention. While a meat-like food contains less saturated fatty acids and has lower energy than meat, the meat-like food is made from ingredients that contain a similar amount of protein. Intake of a meat-like food as an alternative to a meat food can lead to prevention, improvement, or the like of a lifestyle-related disease such as metabolic syndrome.

As a representative of meat-like food, a food using grains and beans such as soybeans is processed for various applications and used for a food composition and a food (Patent Literatures 1 and 2).

### CITATION LIST

### PATENT LITERATURE

Patent Literature 1: JP6396517B
Patent Literature 2: JP7216500B

### SUMMARY OF INVENTION

### TECHNICAL PROBLEM

However, food derived from beans such as soybeans has a raw material odor, that is, a bean odor. Therefore, this bean-derived food has room for improvement in terms of bean odors.

Therefore, an object of the present invention is to provide a food composition in which a bean odor is masked, a method for producing the food composition, and a method for masking a bean odor.

### SOLUTION TO PROBLEM

As a result of intensive studies to solve the above problems, the present inventors have found that in a food composition containing a fermented product of a plant raw material and a bean-derived food, when the fermented product of the plant raw material contains at least one of heptanoic acid, 2,4-decadienal, and 3-octen-2-one, a bean odor of the food composition is masked.

The present invention is as follows.
[1] A food composition containing:
   a fermented product of a plant raw material; and
   a bean-derived food,
   in which the fermented product of the plant raw material contains at least one of heptanoic acid, 2,4-decadienal, and 3-octen-2-one.
[2] The food composition according to [1] above, in which the plant raw material is a grain-derived raw material.
[3] The food composition according to [1] or [2] above, in which the fermented product is a fermented product by a *koji* mold of *Aspergillus.*
[4] The food composition according to [1] or [2] above, further containing:
   a flavor.
[5] The food composition according to [1] or [2] above, in which a content of heptanoic acid is 2.0×10⁻⁵ to 3.0×10⁻² parts by mass with respect to 100 parts by mass of the bean-derived food.
[6] The food composition according to [1] or [2] above, in which a content of 2,4-decadienal is 8.0×10⁻⁷ to 7.0×10⁻⁵ parts by mass with respect to 100 parts by mass of the bean-derived food.
[7] The food composition according to [1] or [2] above, in which a content of 3-octen-2-one is 1.0×10⁻⁶ to 1.0×10⁻⁴ parts by mass with respect to 100 parts by mass of the bean-derived food.
[8] A method for producing a food composition, the method including:
   blending a fermented product of a plant raw material into a bean-derived food,
   in which the fermented product of the plant raw material contains at least one of heptanoic acid, 2,4-decadienal, and 3-octen-2-one.
[9] A method for masking a bean odor, the method including:
   blending a fermented product of a plant raw material into a bean-derived food,
   in which the fermented product of the plant raw material contains at least one of heptanoic acid, 2,4-decadienal, and 3-octen-2-one.

### ADVANTAGEOUS EFFECTS OF INVENTION

The present invention provides a food composition in which a bean odor is masked, a method for producing the food composition, and a method for masking a bean odor.

### DESCRIPTION OF EMBODIMENTS

Hereinafter, the present invention will be described in detail, but these are examples of preferred embodiments. The present invention is not limited to these contents.

The expression "to" of a numerical range is a range including the numerical values before and after it. For example, "0 mass% to 100 mass%" means a range of 0 mass% or more and 100 mass% or less.

In the present description, the term "bean odor" refers to a bean-specific odor felt in a nasal cavity (retronasal odor) from a back portion of a throat through an oral cavity when a bean-derived food is contained in the mouth, when the bean-derived food is chewed, and/or when the bean-derived food is swallowed. Here, the bean odor may be an odor sensed as a combination of the retronasal odor and an odor directly sensed at the nose (orthonasal odor).

The bean odor is preferably a bean odor when a bean-derived food is chewed. The chewing refers to crushing food contained in the mouth by teeth to form a soft and easy-to-swallow food bolus.

The bean odor may be a soybean odor. That is, the "bean-specific odor" in the definition of the "bean odor" may be the "soybean-specific odor".

In the present description, "masking of a bean odor" includes both disappearance of the bean odor and reduction of the bean odor.

### [Food Composition]

A food composition according to one aspect of the present invention contains a fermented product of a plant raw material and a bean-derived food. The fermented product of the plant raw material contains at least one of heptanoic acid, 2,4-decadienal, and 3-octen-2-one.

In the food composition containing the fermented product of the plant raw material and the bean-derived food, it is presumed that at least one of heptanoic acid, 2,4-decadienal, and 3-octen-2-one contained in the fermented product of the plant raw material reaches olfactory epithelial cells at the same time as an off-flavor, and maintains the off-flavor and a volatilization state, so that the bean odor of the bean-derived food can be masked.

In the present description, the off-flavor is a bean odor.

In the present description, when the bean odor of the food composition according to one aspect of the present invention disappears or decreases as compared with a food composition as a comparison target, it can be said that the bean odor is masked. The food composition as a comparison target refers to a food composition not containing heptanoic acid, 2,4-decadienal, and 3-octen-2-one because it does not contain a fermented product of a plant raw material.

### (Plant Raw Material)

In the present description, examples of the plant raw material include those containing at least one of a carbon source and a nitrogen source. Examples of the plant raw material include a grain-derived raw material and a fruit-derived raw material.

Examples of the grain-derived raw material include protein-derived raw materials derived from whole soybeans, defatted soybeans, soybean protein, wheat gluten, peas, broad beans, adzuki beans, and the like and starch-derived raw materials derived from wheat, barley, rye, bran, rice, rice bran, corn, starch pulp, and the like. The grain-derived raw material may also be bean pulp, wheat bran, beer dregs, or corn powder. The wheat bran is the outer layer part of wheat grains. The beer dregs are dregs remaining after the manufacture of beer and refer to a solid remaining after mixing and stirring crushed malt and hot water and removing wort by filtration. A kind thereof or a combination thereof can be used.

The grain-derived raw material is preferably rich in the carbon source and the nitrogen source. In particular, from the viewpoint of the dietary fiber content, the grain-derived raw material is preferably bean pulp, and more preferably a soy pulp. The soy pulp is pulp of soybeans.

It is presumed that a fermented product contains at least one of heptanoic acid, 2,4-decadienal, and 3-octen-2-one because a microorganism assimilates a component derived from the plant raw material and produces a metabolite unique to the microorganism by using the plant raw material as described above. In order to exhibit the effects of the present invention, the plant raw material preferably contains a linear fatty acid.

### (Fermented Product)

The fermented product of a plant raw material is a product obtained by fermenting the plant raw material with microorganisms or a product obtained by fermenting the plant raw material with microorganisms. In the present description, examples of microorganisms include filamentous fungi including *koji* molds, lactic acid bacteria, and yeasts. In addition, in the present description, a *koji* mold fermented product of the plant raw material is obtained by fermenting the plant raw material with the *koji* mold, or obtained by fermenting the plant raw material with the *koji* mold.

Although the kind of the *koji* mold is not particularly limited, *koji* molds of *Aspergillus* are preferable because the *koji* molds are used for food production. Of these, *Aspergillus oryzae, Aspergillus awamori, Aspergillus inuii, Aspergillus usamii, Aspergillus saitoi* and the like are preferable.

In the case of *Aspergillus oryzae,* strain ATCC1011, strain ATCC22788, strain NISL1365, and the like are preferable, and strain ATCC1011 and strain ATCC22788 are more preferable. Strain ATCC1011 is also referred to as strain IFO4075, and strain ATCC22788 is also referred to as strain RIB128. In the case of *Aspergillus awamori,* strain JCM22312 is preferable. In the case of *Aspergillus inuii,* strain NISL1608 is preferable. In the case of *Aspergillus usamii,* strain ATCC11364 is preferable. In the case of *Aspergillus saitoi,* strain NISL1541 is preferable.

Strain ATCC1011, strain ATCC22788, and strain ATCC11364 can be acquired from The Global Bioresource Center. Strain JCM22312 can be acquired from Riken.

It is presumed that the fermented product contains at least one of heptanoic acid, 2,4-decadienal, and 3-octen-2-one because a linear fatty acid contained in the plant raw material is converted into an aroma component by an enzyme produced by the microorganism by using the microorganisms as described above.

The fermented product is preferably a fermented product obtained by subjecting a plant raw material to a fermentation treatment and then drying, and may be a fermented product obtained by subjecting a plant raw material to a fermentation treatment and then drying.

Examples of a drying method include methods such as freeze drying, drying under reduced pressure, and heat drying.

The heptanoic acid, 2,4-decadienal, and 3-octen-2-one contained in the fermented product of the plant raw material may be heptanoic acid, 2,4-decadienal, and 3-octen-2-one themselves, and may be in the form of a solvate such as a hydrate thereof.

The total content of heptanoic acid, 2,4-decadienal, and 3-octen-2-one in the fermented product of the plant raw material is not particularly limited, and is preferably 2.0×10^{- 7} to 7.0×10⁻¹ mass%, and more preferably 2.0×10⁻⁶ to 7.0×10⁻² mass%.

The content of heptanoic acid in the fermented product of the plant raw material is not particularly limited, and is preferably 7.0×10⁻⁵ to 7.0×10⁻¹ mass%, and more preferably 7.0×10⁻⁴ to 7.0×10⁻² mass%.

The content of 2,4-decadienal in the fermented product of the plant raw material is not particularly limited, and is preferably 2.0×10⁻⁷ to 2.0×10⁻³ mass%, and more preferably 2.0×10⁻⁶ to 2.0×10⁻⁴ mass%.

The content of 3-octen-2-one in the fermented product of the plant raw material is not particularly limited, and is preferably 2.0×10⁻⁷ to 2.0×10⁻³ mass%, and more preferably 2.0×10^{- 6} to 2.0×10⁻⁴ mass%.

### (Bean-Derived Food)

In the present description, the "bean-derived food" is not particularly limited as long as it is a food derived from beans. The bean-derived food may be any food as long as masking of the bean odor is desired, and may already have a bean odor or may have a bean odor in the future.

Examples of the raw material beans include soybeans, whole soybeans, peas, broad beans, and adzuki beans. The raw material beans are preferably soybeans, that is, the bean-derived food is preferably a soybean-derived food.

The shape of the bean-derived food may be any of a solid, a semi-solid, a fluid, a jelly, a liquid, and the like. A solid is preferable, and a solid that can be chewed is more preferable.

Examples of the bean-derived food include beans, boiled beans, roasted beans, soybean flour, natto, miso, soy sauce, soy milk, yuzu, soy pulp, tofu, frozen tofu, deep-fried tofu, deep-fried thick tofu, a substitute for meat, noodles, foods used in the production thereof, and foods in the middle of the production thereof. Among them, the substitutes for meat are preferable. The substitute for meat is a food that does not contain meat and can be a substitute for livestock meat.

Examples of the substitute for meat include foods in forms such as minced meat, a patty, a hamburger steak, surimi, and ham. Examples of the substitute for meat include foods obtained by heating and cooking these substitutes for meat, for example, cooked materials such as fried chicken, nuggets, boiled chicken, hamburger steaks, meatballs, meatloaf, minced meat cutlets, gyoza dumplings, shumai dumplings, wontons, spring rolls, and meat buns that have a meat-like flavor.

### (Composition of Food Composition)

The content of each of heptanoic acid, 2,4-decadienal, and 3-octen-2-one in the food composition is not particularly limited and can be appropriately set.

In the present description, when heptanoic acid, 2,4-decadienal, and 3-octen-2-one are in the form of a solvate such as a hydrate thereof, the content of each of heptanoic acid, 2,4-decadienal, and 3-octen-2-one is a value converted to the amount of the same moles of the compound itself.

The food composition according to one aspect of the present invention preferably contains 1 mass% or more and less than 100 mass% of the fermented product of the plant raw material.

The food composition according to one aspect of the present invention more preferably contains a fermented product of a plant raw material such that the total content of heptanoic acid, 2,4-decadienal, and 3-octen-2-one is preferably 2.0×10⁻⁸ to 7.0×10⁻² mass%, and more preferably 2.0×10⁻⁷ to 7.0×10⁻³ mass%.

The food composition according to one aspect of the present invention more preferably contains a fermented product of a plant raw material such that the content of heptanoic acid is preferably 7.0×10⁻⁶ to 7.0×10⁻² mass%, and more preferably 7.0×10⁻⁵ to 7.0×10⁻³ mass%.

The food composition according to one aspect of the present invention more preferably contains a fermented product of a plant raw material such that the content of 2,4-decadienal is preferably 2.0×10⁻⁸ to 2.0×10⁻⁴ mass%, and more preferably 2.0×10⁻⁷ to 2.0×10⁻⁵ mass%.

The food composition according to one aspect of the present invention more preferably contains a fermented product of a plant raw material such that the content of 3-octen-2-one is preferably 3.0×10⁻⁸ to 3.0×10⁻⁴ mass%, and more preferably 3.0×10⁻⁷ to 3.0×10⁻⁵ mass%.

The content of the bean-derived food in the food composition according to one aspect of the present invention is not particularly limited, and is preferably more than 0 mass% and 99 mass% or less, and more preferably 1 mass% or more and 99 mass% or less.

The food composition according to one aspect of the present invention preferably contains a fermented product of a plant raw material such that the total amount of heptanoic acid, 2,4-decadienal, and 3-octen-2-one is preferably 8.0×10⁻⁸ to 3.0×10⁻¹ parts by mass, and more preferably 8.0×10⁻⁷ to 3.0×10⁻² parts by mass with respect to 100 parts by mass of the bean-derived food.

The food composition according to one aspect of the present invention preferably contains a fermented product of a plant raw material such that the total amount of heptanoic acid is preferably 2.0×10⁻⁶ to 3.0×10⁻¹ parts by mass, and more preferably 2.0×10⁻⁵ to 3.0×10⁻² parts by mass with respect to 100 parts by mass of the bean-derived food.

The food composition according to one aspect of the present invention preferably contains a fermented product of a plant raw material such that the amount of 2,4-decadienal is preferably 8.0×10⁻⁸ to 7.0×10⁻⁴ parts by mass, and more preferably 8.0×10⁻⁷ to 7.0×10⁻⁵ parts by mass with respect to 100 parts by mass of the bean-derived food.

The food composition according to one aspect of the present invention preferably contains a fermented product of a plant raw material such that the amount of 3-octen-2-one is preferably 1.0×10⁻⁷ to 1.0×10⁻³ parts by mass, and more preferably 1.0×10⁻⁶ to 1.0×10⁻⁴ parts by mass with respect to 100 parts by mass of the bean-derived food.

The contents of heptanoic acid, 2,4-decadienal, and 3-octen-2-one contained in the food composition according to one aspect of the present invention and the fermented product of the plant raw material can be analyzed by a GC-MS method. Measurement conditions of GC-MS are shown below.
GC-MS: GC-MS-QP2010Ultra (manufactured by Shimadzu Corporation)
Column: GC capillary column DB-WAX Ultra Inart (manufactured by Agilent)
Column oven: 40°C (3 min)→5°C/min→110°C→10°C/min→240°C (5 min)
Injection port temperature: 240°C
Carrier gas: He
Interface temperature: 240°C
Ion source temperature: 240°C
Data collection time: 2 min to 35 min
Mass range: 40 m/z to 250 m/z

The contents of heptanoic acid, 2,4-decadienal, and 3-octen-2-one in the food composition according to one aspect of the present invention can be adjusted by measuring the content of each of heptanoic acid, 2,4-decadienal, and 3-octen-2-one in the fermented product of the plant raw material according to the above-described method and appropriately setting the content of the fermented product of the plant raw material in the food composition according to one aspect of the present invention.

The food composition according to one aspect of the present invention may further contain a flavor in order to impart a better flavor to the bean-derived food. Examples of the flavor include isothiocyanates, indole, and derivatives thereof, ethers, esters, ketones, fatty acids, higher aliphatic alcohols, higher aliphatic aldehydes, higher aliphatic hydrocarbons, thioethers, thiols, terpene-based hydrocarbons, phenol ethers, phenols, furfural and derivatives thereof, aromatic alcohols, aromatic aldehydes, and lactones.

The content of the flavor in the food composition according to one aspect of the present invention is preferably 1.0×10⁻¹⁰ to 1 mass%, and more preferably 1.0×10⁻⁸ to 1.0×10⁻³ mass%.

In the food composition according to one aspect of the present invention, the amount of the flavor is preferably 4.0×10⁻¹⁰ to 4 parts by mass, and more preferably 4.0×10⁻⁸ to 4.0×10^{- 3} parts by mass with respect to 100 parts by mass of the bean-derived food.

The food composition according to one aspect of the present invention may further contain other components. Examples of the other component include a carrier (base) and an additive (for example, an excipient, a dispersant, an emulsifier, a buffer, a stabilizer, a binder, a disintegrant, a lubricant, an antioxidant, a preservative, a coating agent, or a colorant) that can be blended into foods and drinks or pharmaceuticals. Examples of the excipient include: oligosaccharides such as isomaltooligosaccharides, galactooligosaccharides, and fructooligosaccharides; saccharides such as polysaccharides such as dextrin, cellulose, gum arabic, and starch (corn starch and the like), lactose, glucose, fructose, sugar, sucrose, maltose, starch syrup, honey, invert sugar, syrup, and isomerized sugars (for example, high-fructose syrup, fructose syrup, and high-fructose corn syrup); sugar alcohols such as sorbitol, erythritol, lactitol, maltitol, mannitol, xylitol, and reduced palatinose; substitutes for meat other than those derived from beans; vegetable proteins such as soybean protein isolate, wheat gluten, defatted soybeans, and peas; dietary fibers; and lipids. The food composition according to one aspect of the present invention is preferably used as a substitute for bean-derived meat, and therefore, the food composition according to one aspect of the present invention preferably contains polysaccharides, dietary fibers, proteins, and the like.

### (Other Features of Food Composition)

The shape of the food composition according to one aspect of the present invention may be any of a solid, a semi-solid, a fluid, a jelly, a liquid, and the like. A solid is preferable, and a solid that can be chewed is more preferable.

More specifically, the food composition according to one aspect of the present invention can be used as a substitute for livestock meat. The food composition according to one aspect of the present invention is preferably a livestock meat-like food composition. The livestock meat means meat from livestock (pigs, cows, sheep, goats, horses, and the like), poultry (chickens, quails, domestic ducks, ducks, crossbreed ducks, geese, turkeys, and the like), and wildlife such as deer and boar. The definition of livestock meat includes, in addition to socalled meat (muscle), tissues generally used for processed livestock meat foods, such as skin, fat, tendons, cartilage, internal organs, and blood.

The food composition according to one aspect of the present invention can be processed into minced meat, a patty, a hamburger steak, surimi, ham, and the like using a food processor or a mincer.

The food composition according to one aspect of the present invention may be subjected to a cutting process such as chopping or cutting into large pieces in advance. Moreover, by adding and kneading the food composition according to one aspect of the present invention into a mixture of a plant food material and another food material such as vegetable which has been subjected to a cutting process and then subjecting the kneaded mixture to cooking, a cooked material having a meat-like flavor in the form of fried chicken, nugget, *Shigureni* (food boiled down in soy sauce and ginger), hamburg steaks, meatballs, meatloaf, *Menchi-katsu* (fried cutlet of minced meat), gyoza, shumai, wontons, spring rolls, steamed pork buns or the like is obtained. In this regard, meat may be added as another food material. The cooked material is not limited to those listed above, and examples thereof include a cooked material generally using soy sauce as a seasoning component and the like.

### [Method for Producing Food Composition]

A method for producing a food composition according to one aspect of the present invention includes blending a fermented product of a plant raw material into a bean-derived food. The fermented product of the plant raw material contains at least one of heptanoic acid, 2,4-decadienal, and 3-octen-2-one.

The fermented product of the plant raw material can be blended at any stage in the production process of the food composition according to one aspect of the present invention, and the timing and method of blending the fermented product are not particularly limited. The production of the food composition according to one aspect of the present invention can be carried out in the same manner as the production of ordinary foods, except that the fermented product of the plant raw material is blended into the bean-derived food. The fermented product of the plant raw material may be blended into the finished bean-derived food, may be blended into the bean-derived food in the middle of the production, or may be blended into the bean-derived food used for the production.

When the fermented product of the plant raw material is blended into the bean-derived food and then heating is performed, the heating temperature is preferably 80°C to 100°C, and the heating time is preferably 2 minutes to 10 minutes.

### (Production of Fermented Product of Plant Raw Material)

A method for producing a food composition according to one aspect of the present invention may include fermenting the plant raw material with microorganisms before blending the fermented product of the plant raw material into the bean-derived food. Examples of the plant raw material include those described above.

In order to obtain a fermented product of a plant raw material containing at least one of heptanoic acid, 2,4-decadienal, and 3-octen-2-one, it is presumed that it is important to sufficiently grow and proliferate microorganisms in <Fermentation Using Microorganisms> described below.

### <Treatment with Enzymes>

The method for producing a food composition according to one aspect of the present invention may include treating a plant raw material with arabinase and cellulase before fermenting the plant raw material with microorganisms. By treating the plant raw material with arabinase and cellulase, the content of vitamin B increases. Although the reason is not clear, speculated causes are high expression of a gene related to the metabolism of vitamin B due to a change in the balance of saccharides that the microorganism can assimilate, an increase in the amount of the primary metabolite as the substrate of vitamin B and the like.

The cellulase is specifically a hemicellulase, a glucanase, a glucosidase, or the like, and examples of the hemicellulase include xylanase and the like.

Before the treatment with arabinase and cellulase is performed, the plant raw material may be subjected to a heating and pressurizing process. The heating and pressurizing process is preferably performed using an autoclave, an extruder, or a high-pressure heating tube reactor. By such a heating and pressurizing process, the enzymes can efficiently act on the plant raw material.

The ratio between arabinase and cellulase for treating the plant raw material is preferably 1:3 to 9:1, further preferably 1:3 to 3:1, on an enzyme unit (also referred to as "unit" or "U" below) basis. When a ratio between arabinase and cellulase is (1 or more):3 on a unit basis, there is an advantage that the amount of vitamin B further increases.

It is more preferable to treat 1 g of the plant raw material with 4 U or more arabinase and 0.94 U or more cellulase, and it is more preferable to treat 1 g of the plant raw material with 4 U or more arabinase and 1.6 U or more cellulase. The concentration of arabinase and the concentration of cellulase per 1 g of the plant raw material are further preferably 4 to 15 U and 10 to 12.5 U, respectively. When the concentration of arabinase and the concentration of cellulase per 1 g of the plant raw material are 4 U or more and 0.94 U or more, respectively, there is an advantage that the raw material is decomposed sufficiently and the vitamin B amount increases. When the concentrations are 15 U or less and 12.5 U or less, respectively, there is an advantage that the costs used in the production can be reduced.

Moreover, arabinase and cellulase in the medium substrate containing the plant raw material are preferably at 250 to 900 mU/ml and 100 to 750 mU/ml, respectively.

The temperature, the pH, the treatment time, and the like of the treatment of the plant raw material with arabinase and cellulase can be appropriately determined in consideration of the concentrations of arabinase and cellulase and the like. The temperature is preferably 0°C to 80°C, more preferably 20°C to 70°C, still more preferably 30°C to 60°C. When the temperature is in the range, there is an advantage that the enzymes exhibit high activities and that the raw material is decomposed efficiently. The pH is preferably 2 to 8, more preferably 3 to 7, and still more preferably 4 to 6. When the pH is in the range, there is an advantage that the enzymes exhibit high activities and that the raw material is decomposed efficiently. The treatment time is preferably 1 hour to 72 hours, more preferably 1 hour to 24 hours, and still more preferably 1 hour to 20 hours. When the treatment time is 72 hours or shorter, there is an advantage that the production period can be shortened. Moreover, when the treatment time is 1 hour or longer, there is an advantage that the raw material can be decomposed sufficiently. During the treatment of the plant raw material with arabinase and cellulase, the raw material and the enzymes are preferably stirred because the hydrolysis is promoted due to an increase in the contact faces of the raw material and the enzymes, for example.

When the plant raw material is treated with arabinase and cellulase, the order of treatment may be any order. The plant raw material which has been treated with arabinase may be treated with cellulase, or the plant raw material which has been treated with cellulase may be treated with arabinase. Alternatively, both arabinase and cellulase may be added to the plant raw material to simultaneously perform the enzyme treatment.

The amount of arabinan contained in the plant raw material which has been treated with arabinase and cellulase is decreased preferably by 80 mass% or more, and more preferably by 90 mass% or more, from the amount of arabinan in the plant raw material before the treatment with arabinase and cellulase. When the amount of arabinan contained in the plant raw material which has been treated with arabinase and cellulase is decreased by 80 mass% or more from the amount of arabinan in the plant raw material before the treatment with arabinase and cellulase, there is an advantage that the amount of arabinose in the medium increases and that the amount of vitamin B increases due to a change in the balance of saccharides that the *koji* mold can assimilate.

### <Fermentation Using Microorganism>

The method for producing a food composition according to one aspect of the present invention may include adding, before fermenting the plant raw material with the microorganisms, a carbon source or a nitrogen source other than the plant raw material, metal ions, or an antifoaming agent for eliminating bubbles in the middle of culture in order to set conditions for actively growing microorganisms. The pH may be adjusted to pH 3 to 7.

The types of the microorganisms are the same as those listed as the microorganisms used for the production of the fermented product contained in the food composition according to one aspect of the present invention.

The spores of the microorganisms are preferably added so as to reach a content of 1×10⁴ or more per gram of the plant raw material, and more preferably added so as to reach a content of 1×10⁶ to 1×10⁸ per gram of the plant raw material.

The plant raw material may be put into a container which can prevent contamination with harmful microorganisms, and fermentation by microorganisms may be performed in the container. Here, the container which can prevent contamination with harmful microorganisms may be a container having a structure which can disconnect the inside of the container and the external atmosphere. A sterilized polypropylene jar, a glass medium bottle, or the like can be used for experimental application, and a jar fermenter, a pressure type fermentation tank, or the like, which has a function capable of supplying sterile air into the container can be used for industrial application. Moreover, a filter which can collect 99.97% or more of dust of 0.3 µm or more, such as a HEPA filter, can be used to sterilize the air. Moreover, it is preferable to perform stirring during the fermentation with the microorganism.

The fermentation may be performed at 10°C to 40°C, preferably at 25°C to 37°C, for 1 day to 5 days, preferably for 2 days and 3 days. When the fermentation temperature is in the range, there is an advantage that the microorganism grows actively. Moreover, when the fermentation time is 5 days or shorter, there is an advantage that the cost of fermentation and the environmental burden are reduced. Moreover, when the fermentation time is 1 day or longer, there is an advantage that the microorganism grows sufficiently.

### <Post-Treatment>

In the production method according to one aspect of the present invention, as a post-treatment for fermenting the plant raw material with microorganisms, treatments such as a pulverization treatment, a sterilization treatment, a disinfection treatment, a concentration treatment, a membrane separation treatment, and a drying treatment may be performed, and the drying treatment is preferably performed. Examples of the drying treatment include methods such as freeze drying, drying under reduced pressure, and heat drying.

The post-treatment may be performed at any stage. Moreover, the post-treatment may be a single treatment or a combination of treatments.

### [Method for Masking Bean Odor]

When a fermented product of a plant raw material containing at least one of heptanoic acid, 2,4-decadienal, and 3-octen-2-one is blended into a bean-derived food, a bean odor of the bean-derived food can be masked. Therefore, an aspect of the present invention, a method for masking a bean odor can be mentioned. The method includes blending a fermented product of a plant raw material into a bean-derived food. The fermented product of the plant raw material contains at least one of heptanoic acid, 2,4-decadienal, and 3-octen-2-one.

As described above, the following matters are disclosed in the present description.
<1> A food composition containing:
   a fermented product of a plant raw material; and
   a bean-derived food,
   in which the fermented product of the plant raw material contains at least one of heptanoic acid, 2,4-decadienal, and 3-octen-2-one.
<2> The food composition according to <1> above, in which the plant raw material is a grain-derived raw material.
<3> The food composition according to <1> or <2> above, in which the fermented product is a fermented product by a *koji* mold of *Aspergillus.*
<4> The food composition according to any one of <1> to <3> above, further containing:
   a flavor.
<5> The food composition according to any one of <1> to <4> above, in which a content of heptanoic acid is 2.0×10⁻⁵ to 3.0×10⁻² parts by mass with respect to 100 parts by mass of the bean-derived food.
<6> The food composition according to any one of <1> to <5> above, in which a content of 2,4-decadienal is 8.0×10⁻⁷ to 7.0×10⁻⁵ parts by mass with respect to 100 parts by mass of the bean-derived food.
<7> The food composition according to any one of <1> to <6>, in which a content of 3-octen-2-one is 1.0×10⁻⁶ to 1.0×10⁻⁴ parts by mass with respect to 100 parts by mass of the bean-derived food.
<8> A method for producing a food composition, the method including:
   blending a fermented product of a plant raw material into a bean-derived food,
   in which the fermented product of the plant raw material contains at least one of heptanoic acid, 2,4-decadienal, and 3-octen-2-one.
<9> A method for masking a bean odor, the method including:
   blending a fermented product of a plant raw material into a bean-derived food,
   in which the fermented product of the plant raw material contains at least one of heptanoic acid, 2,4-decadienal, and 3-octen-2-one.

### Examples

The present invention is described specifically below with reference to Examples, but the present invention is not limited to the Examples below unless it does not go beyond the gist thereof.

### <Example 1: Evaluation of Bean-derived Food Including Fermented Product>

First, proteins of textured soy proteins and fermented products described in Table 1 were prepared.

### [Textured Soy Protein]

FUJINIK 52S manufactured by Fuji Oil Co., Ltd. was used as a textured soy protein.

### [Fermented Product]

First, the materials shown below were prepared.

### (Soy Pulp Powder)

The soy pulp powder was obtained by drying the pressed cake of soymilk discharged in the process of producing soymilk, and a powder "Kikkoman Soy Milk soy pulp Powder" was used from dried soy pulp manufactured by Kikkoman Corporation.

### (Enzymes)

As the arabinase, "PECLYVE FILTRATION" (manufactured by Soufflet biotechnologies) was used, and as the cellulase "CELLULYVE 50L" (manufactured by Soufflet biotechnologies) was used.

### (Others)

As the reagents, commercial guaranteed reagents were used.

The fermentation was performed with a 300 L jar (manufactured by B.E. Marubishi Co., Ltd.). Water was added to 18 kg of the soy pulp powder to dilute the soy pulp powder to 170 L, and 27 g of Shin-Etsu Silicone (registered trademark) KM72F (manufactured by Shin-Etsu Chemical Co., Ltd.) as an antifoaming agent was added thereto, followed by sterilization at 123°C for 60 minutes. An enzyme solution filtered through a filter having a pore size of 0.22 µm was added such that a final concentration of arabinase was 0.6 U/ml and a final concentration of cellulase was 0.1 U/ml, followed by stirring at 60°C for 2 hours. After the reaction, the mixture was cooled to 30°C.

Pre-culture was performed as follows. To each of six 500 ml baffled Erlenmeyer flasks were added 5 g of soy pulp powder and 100 ml of water, followed by autoclaving (121°C, 30 minutes). *Strain Aspergillus oryzae* NISL1365 (glycerol stock), which is a seed fungus, was added in an amount of 0.5 ml each, and was inoculated such that the number of initial spores in the pre-culture solution was 5×10⁵/ml. This pre-culture solution was subjected to shaking culture (30°C, 160 rpm) for 24 hours. Thereafter, the pre-culture solution was inoculated into a 300 L jar and cultured at 30°C for 3 days. The aeration speed and stirring speed were 0.5 vvm and 100 rpm at the start, and increased to 1 vvm and 150 rpm after 18 hours. After the culture, the fermented product was sterilized by heating (80°C, 30 minutes).

The fermented product subjected to the heat sterilization treatment was dried for 1 minute with a drum dryer (product name: "Drum Dryer D-00", manufactured by Katsuragi Industry Co., Ltd.) set to a gap of 0.3 mm and a surface temperature of 150°C. In this way, the fermented products shown in Table 1 were prepared.

### [Preparation of Hamburg-steak-shaped Food]

Using the materials shown in Table 1, hamburg-steak-shaped foods were molded. A textured soy protein (FUJINIK 52S, 140 g) was reconstituted with 420 g of water. The fermented product (77.4 g) was reconstituted with 102.6 g of water. The mass of water shown in Table 1 is the total mass of water used for reconstituting the textured soy protein and the fermented product with water. In addition, the mass of each of the textured soy protein and the fermented product shown in Table 1 is the mass before reconstituting with water.

Each food was kneaded for 10 seconds using a kneader (product name "Microcomputer Food Processor SKF-H101", manufactured by Tiger Corporation). The kneaded sample was formed into a size having a thickness of 1.8 cm and an inner diameter of 7.5 cm. In a frying pan was placed 5 ml of oil, and the formed sample was fired with low heat for 1 minute and 20 seconds on each side for a total of 2 minutes and 40 seconds to form a hamburger steak shape. The low heat refers to the degree of fire immediately before a tip of the fire comes into contact with a bottom of the frying pan. The hamburg-steak-shaped food thus produced is the "final product" described in Table 1.

Sensory evaluation was performed by 4 to 5 panelists who were trained to determine soybean odor according to JIS standards by a 7-step scoring method. The sensory evaluator chews the sample 10 times or more, and evaluated the bean odor wafting from the nose. A sample to which no reagent was added was evaluated as "5" (a little strong sense of a bean odor), and the samples were evaluated by "0" (no sense of a bean odor) to "7" (a strong sense of a bean odor). The T-test was performed based on the results of the sensory evaluation to determine whether there was a significant difference with respect to the score "5" of the control.

The results are shown in Table 1. It was revealed that the bean odor derived from the mixed textured soy proteins is prevented when the fermented product is contained. In particular, the effect of reducing the bean odor was achieved even in the final product containing 1% of the fermented product on a mass basis.

**[Table 1]**

| Table 1 Preparation of food sample using fermented product | | | | | |
|---|---|---|---|---|---|
| Test group | Water (g) | Textured soy protein (g) | Fermented product (g) | Content of fermented product (%) (on mass basis) with respect to final product | Sensory evaluation score |
| 1 | 33.0 | 6.3 | 10.8 | 22% | 1.2 |
| 2 | 36.6 | 11.3 | 2.2 | 4% | 3 |
| 3 | 37.3 | 12.2 | 0.5 | 1% | 3 |

Aromatic components specific to fermented products were analyzed by GC-MS. Measurement conditions of GC-MS are shown below.
GC-MS: GC-MS-QP2010Ultra (manufactured by Shimadzu Corporation)
Column: GC capillary column DB-WAX Ultra Inart (manufactured by Agilent)
Column oven: 40°C (3 min)→5°C/min→110°C→10°C/min→240°C (5 min)
Injection port temperature: 240°C
Carrier gas: He
Interface temperature: 240°C
Ion source temperature: 240°C
Data collection time: 2 min to 35 min
Mass range: 40 m/z to 250 m/z

The analysis results by the GC-MS are shown in Table 2. It was revealed that the aroma components shown in Table 2 remained in the food depending on the amount of fermented products. In the present description, ppm is a value on a mass basis.

**[Table 2]**

| Table 2 Characteristic aroma components contained in fermented soy pulp | |
|---|---|
| | Amount of each component in fermented soy pulp (ppm) |
| Heptanoic acid | 70 |
| 2,4-decadienal | 0.19 |
| 3-octen-2-one | 0.22 |

### <Example 2: Evaluation of Bean-Odor Mask of Aromatic Component Derived from Fermented Product>

In order to clarify whether each aroma component shown in Table 2 exhibits an effect of reducing a bean odor, a test of adding these components to a textured soy protein was performed.

Heptanoic acid, 2,4-decadienal, and 3-octen-2-one were used as a soybean odor mask aroma component. As each reagent, a food-grade reagent manufactured by Sigma-Aldrich was used. Hereinafter, heptanoic acid, 2,4-decadienal, and 3-octen-2-one are also referred to as reagents.

The textured soy protein (20 g) was reconstituted with 60 mL of water and allowed to stand at room temperature for 30 minutes. Thereafter, the resultant was heated at 100°C for 5 minutes using a frying pan and used as a sample for sensory evaluation.

When the reagent was added, a diluent was prepared, and the reagent was added so as to be 0.0001 to 5 ppm per 1 g of the sample after cooking. In the present description, ppm is a value on a mass basis, and when the reagent is 1 ppm per 1 g of sample, the reagent is 1×10^{- 6} g per 1 g of sample.

Sensory evaluation was performed in the same manner as in Example 1. The results are shown in Table 3. In Table 3, "mixing of three components" is a result when a reagent obtained by mixing three components including heptanoic acid, 2,4-decadienal, and 3-octen-2-one is added to the textured soy protein such that the total concentration of these components is the final concentration described in Table 3.

**[Table 3]**

| Table 3 Test for addition of each aroma component to textured soy protein | | | | | |
|---|---|---|---|---|---|
| | Final concentration (ppm) | | | | |
| | 5 | 0.1 | 0.01 | 0.001 | 0.0001 |
| Heptanoic acid | 3.0 | 3.6 | 3.6 | 3.4 | - |
| 2,4-decadienal | 2.2 | 3.4 | 3.2 | 3.4 | 3.7 |
| 3-octen-2-one | 1.8 | 3.6 | 3.3 | 2.9 | - |
| Mixing of three components | 2.0 | 2.5 | 3.0 | 3.0 | 3.8 |

As a result, it was found that heptanoic acid and 3-octen-2-one had a significant effect of reducing a bean odor at a final concentration in a concentration range of 0.001 to 5 ppm (Table 3). In addition, under the conditions of mixing 2,4-decadienal and the three components, a significant effect of reducing the bean odor was found in the concentration range of 0.0001 to 5 ppm (Table 3). It was found that the flavor of the added reagent was too strong at 10 ppm.

### <Example 3: Evaluation of Content of Each Aroma Component in Food Sample Containing Fermented Product>

Each aroma component in a food sample containing 1 mass% of the fermented product was analyzed using GC-MS. Water (4 ml) was added to 2 g of a food sample prepared in the same manner as the hamburg-steak-shaped food prepared in Example 1, followed by centrifuging at 14,000 rpm for 10 minutes, and then 2 ml of the solution was collected. The collected solution was transferred to a vial for analysis evaluation containing 1 g of salt and analyzed.

In order to create a calibration curve, heptanoic acid, 2,4-decadienal, and 3-octen-2-one were diluted with water, and a diluent in a concentration range of 0.001 to 10 ppm was transferred to an analytical vial and analyzed. The results are shown in Table 4.

### [Table 4]

**Table 4**

| | Amount of each component (ppm) in food sample containing 1 mass% of fermented product |
|---|---|
| Heptanoic acid | 0.7 |
| 2,4-decadienal | 0.0018 |
| 3-octen-2-one | 0.0027 |

When a food sample containing 1 mass% of the fermented product was analyzed, it was revealed that heptanoic acid was 0.7 ppm, 2,4-decadienal was 0.0018 ppm, and 3-octen-2-one was 0.0027 ppm (Table 4). This was a numerical value higher than the concentration at which the effect of reducing the bean odor was found for each aroma component in Example 2. When the food sample contains 100% fermented products with the amount of textured soy protein added being 0%, the food sample contains heptanoic acid in an amount of 70 ppm, 2,4-decadienal in an amount of 0.18 ppm, and 3-octen-2-one in an amount of 0.27 ppm.

It is obvious that those skilled in the art can reach modified examples or corrected examples within the scope described in the claims, and it is understood that the examples of course belong to the technical scope of the present invention. The constituent features in the embodiments may be combined freely within the scope which does not deviate from the contents of the present invention.

The present application is based on a Japanese patent application filed on July 3, 2023 (patent application No. 2023-109596) and a Japanese patent application filed on November 24, 2023 (patent application No. 2023-199329), the contents of which are incorporated herein by reference.

## Claims

1. A food composition comprising:
a fermented product of a plant raw material; and
a bean-derived food,
wherein the fermented product of the plant raw material contains at least one of heptanoic acid, 2,4-decadienal, and 3-octen-2-one.

2. The food composition according to claim 1, wherein the plant raw material is a grain-derived raw material.

3. The food composition according to claim 1 or 2, wherein the fermented product is a fermented product by a *koji* mold of *Aspergillus.*

4. The food composition according to claim 1 or 2, further comprising:
a flavor.

5. The food composition according to claim 1 or 2, wherein a content of heptanoic acid is 2.0×10⁻⁵ to 3.0×10⁻² parts by mass with respect to 100 parts by mass of the bean-derived food.

6. The food composition according to claim 1 or 2, wherein a content of 2,4-decadienal is 8.0×10⁻⁷ to 7.0×10⁻⁵ parts by mass with respect to 100 parts by mass of the bean-derived food.

7. The food composition according to claim 1 or 2, wherein a content of 3-octen-2-one is 1.0×10⁻⁶ to 1.0×10⁻⁴ parts by mass with respect to 100 parts by mass of the bean-derived food.

8. A method for producing a food composition, the method comprising:
blending a fermented product of a plant raw material into a bean-derived food,
wherein the fermented product of the plant raw material contains at least one of heptanoic acid, 2,4-decadienal, and 3-octen-2-one.

9. A method for masking a bean odor, the method comprising:
blending a fermented product of a plant raw material into a bean-derived food,
wherein the fermented product of the plant raw material contains at least one of heptanoic acid, 2,4-decadienal, and 3-octen-2-one.
